# EUROPEAN PATENT APPLICATION

(11) **EP 0 740 264 A2**
(43) Date of publication of application: **30.10.1996**
(21) Application number: 96106687.5
(22) Date of filing: 26.04.1996
(51) Int. Cl.: G06K 11/14

(54) **Environmental barrier for an acoustic device**

(30) Priority: 27.04.1995 US 430026
(71) Applicant: W.L. GORE & ASSOCIATES, INC., Newark, Delaware 19714 (US)
(72) Inventor: Hamilton Crowley ,Elizabeth,, Elkton,MD 21921, (US)
(74) Representative: Klunker . Schmitt-Nilson . Hirsch

(57) **Abstract**

An environmental barrier is provided for a surface acoustic wave system. The environmental barrier is defined by at least one elongated body of a fluoropolymer material which has a porous microstructure. The environmental barrier is substantially transmissive to surface wave energy.

## Description

### FIELD OF THE INVENTION

This invention generally relates to environmental barriers. More particularly, the present invention relates to a gasket for sealing acoustic systems, such as surface acoustic wave touchscreens, for example.

### BACKGROUND OF THE INVENTION

A touchscreen is one of the most intuitive interactive controlling devices available. Well designed touchscreens literally put information at the fingertips of a user. By pressing transparent overlays, users interact directly with graphical icons, instead of keyboards, cursors, mice, or buttons. Touchscreens do not require any computer experience of a user.

A basic touch system consists of hardware, which includes a sensor unit and controller, and firmware, which drives the input system and defines the software interface. Presently, there are a plurality of touchscreen technologies which are differentiated by the sensing technique and controller electronics employed. These sensing techniques include: resistive, capacitive, scanning infrared, piezoelectric and surface acoustic wave.

The resistive analog touchscreen consists of two conductive sheets separated by an array of clear, tiny elastic dots. The first (substrate) layer may be either glass or plastic, which has a conductive coating, such as indium tin oxide (ITO), which offers uniformity and long-term stability. The second layer, or cover sheet, may be either polycarbonate or oriented polyester, which has a conductive inner coating on the surface facing the substrate conductive coating.

When the front surface of the cover sheet is touched, it contacts the conductive substrate coating beneath it, making an electrical contact. A voltage measurement is then sent to the touchscreen controller, registering the touch location. Resistive touchscreens support only X- and Y-axes.

Digital resistive touchscreens are constructed in much the same manner. However, one of the layers has equally spaced horizontal lines or rows etched into the surface, and the other layer has vertically etched lines or columns. Together, the two sheets form a grid. When you touch the screen a row and column come into contact with each other and the controller detects a specific block in the grid.

Resistive touchscreens are low cost, have no limitation on the stylus, provide reduced parallax, and respond rapidly to touch. However, these touchscreens deliver relatively low optical clarity (65% light transmission) and are subject to vandalism on the front cover sheet.

Capacitive touchscreens work on the principle that high-frequency alternating currents couple between conductors better than direct currents. Coupling can be direct or by "near" contact, so long as the near contact is through an acceptable dielectric substance.

Capacitive touchscreens consist of a glass panel with a transparent conductive coating similar to that used for resistive technology -- either ITO or tin antimony oxide (TAO). A pattern of conductive electrodes around the edge of the glass applies the driver signals and is an essential element in obtaining reasonable linearity from the system.

The controller is an RF source running at about 10 MHz, with outputs for each corner of the screen, each with a current-measuring circuit. When the screen is touched, current passes from the screen through the operator's finger. The amount of current emanating from each corner is related to the location of the touch. Typically, current ratios are computed to find the precise touch location.

These touchscreens nominally consist of a single conductive layer on a glass substrate, and have excellent light transmission. In practice, however, most capacitive touchscreens also have a second conductive layer on the rear side of the glass to act as an electrostatic shield. This second conductive layer reduces the overall light and brightness transmission. Often, the ITO/TAO layer on the screen surface can be scratched. However, some manufacturers now put a very thin glass coating over it to reduce this potential hazard. Because capacitive touchscreens use very low signal levels, the screen must be shielded from both internal display electronics noise and external electromagnetic interference. Plasma displays run at such high noise levels that they generally can't be used in a capacitive touchscreen system.

Overall, capacitive touchscreens deliver good resolution, very good optical clarity (85% light transmission), reduced parallax, excellent environmental resistance (for glass coated screens), and very rapid response to touch. However, electrical capacitance (i.e. a power source) must be built into the stylus, which needs to interact with the electrical characteristics of the screen. (Capacitive touchscreens will not work with heavy gloves or a non-conductive pointer.) Also, capacitive touchscreens are sensitive to static discharge, and are relatively expensive.

Infrared touch systems are based on the ability of a solid object to interrupt a beam of infrared light. The scanning infrared touch system consists of a series of infrared LEDs and phototransistors arranged in an opto-matrix frame. These LEDs are mounted on circuit boards along two adjacent sides of the frame. The corresponding phototransistors are mounted on circuit boards on the opposing two sides of the frame -- one opposite each LED. The LEDs and phototransistors are generally spaced such that the center lines of the infrared beams are a quarter-inch apart, with the number of each dependent on screen size.

The opto-matrix frame is attached to the front of the display, and a specially-designed bezel (which is transparent to infrared) must be placed over the top. This special bezel is necessary to block out ambient light and to prevent saturation of the phototransistors. The bezel also mechanically protects the fragile phototransistors and LEDs.

An infrared controller scans the opto-matrix, turning on LEDs and corresponding phototransistors in a known sequential order roughly 25 times/second. A touch application by the operator interrupts the light beam, preventing it from reaching the phototransistors. The controller senses the decrease in saturation in phototransistors both horizontally and vertically, processing the information into X and Y coordinates for the host computer.

Scanning infrared technology is a reliable, responsive and durable technology that offers high optical clarity and light transmission because no overlay blocks the display. In addition, these systems also tend to be reasonably priced, costing about the same as resistive touchscreens. However, infrared touchscreens experience more parallax problems and provide low resolution. Accordingly, flat or near-flat screens are typically employed with infrared touchscreens. Also, infrared touchscreens require a large number of components, and the quality of those components --particularly the special bezel -- may affect system price and/or reliability. Additionally, although scanning infrared touchscreens theoretically offer good environmental resistance, the technology is adversely affected by dust, smoke and foreign materials. In some environments, it may be necessary to seal the air ventilation path to the touchscreen to prevent environmental contaminants from interfering with or damaging optical devices.

Piezoelectric touch technology uses pressure-sensitive electronics to detect and determine the location of a touch. The touch sensor consists of a clear piece of glass with a stress transducer mounted in each corner. The sensor is mounted on the front surface of the display, with the stress transducers between the glass and the display. The depth of the stress transducers creates an air gap between the glass touchscreen and the face of the display.

A touch causes the glass to flex slightly. This applies pressure to each of the stress transducers - pressure that is inversely proportional to its distance from the point of touch. Each stress transducer then generates a signal proportional to the amount of pressure applied to it by the touch application. The controller processes these signals into X and Y coordinates for transmission to the host computer. Because these touchscreens comprise a piece of clear glass, the light transmissivity, optical clarity, and environmental resilience are all excellent. However, piezoelectric touchscreens can be accidentally triggered by certain vibrations in the environment. Also, this technology is difficult to install because it must be mounted with an air gap between the screen and the front surface of the CRT. Additionally, piezoelectric touch sensors are costly.

A surface acoustic wave (SAW) touchscreen utilizes mechanical waves that propagate across the surface of a medium. Rigid materials, such as glass, conduct acoustic energy (sound waves) very efficiently at precise speeds and in very straight lines. A SAW touch sensor consists of a clear piece of glass upon which two transmitting and two receiving transducers are mounted. A series of partial reflectors are fused onto the glass around the periphery of the sensor. The two transmitting transducers convert an electrical signal from the controller into surface acoustic waves. The transducer-generated signal travels along the outside edges of the screen, encountering the reflective arrays on the screen. Each of these arrays reflects a small portion of wave (about 0.2%) across the surface of the screen. The remainder of the signal continues down the line in this manner. By the time the original wave has reached the other side of the screen, most of its energy has been reflected evenly over the screen surface, with constant wave strength maintained by the spacing of the reflector arrays.

When the reflected waves reach the other side of the screen, the opposing reflective arrays direct the waves toward the receiving transducers, which convert them back into electrical signals. These are transmitted to a controller, where they are compared to a stored reference waveform. When a touch occurs to the sensor, a portion of the wave energy is absorbed, in both the X and Y directions, attenuating the signal. The controller measures this dip in energy to determine the exact touch location.

By using a pliable pointing device, such as a finger or pencil eraser, the user can deliver various degrees of contact pressure, absorbing more or less energy by contacting more or less area. This sensing technique adds a Z-axis dimension to the positioning sensing ability of the SAW touchscreen, and is one of the distinguishing characteristics of SAW touch sensing technology. This additional input variable can be used in a variety of ways. For example, production workers can accelerate conveyor systems by pressing harder on a video button. Adding such "depth" to operator-interface panels packs more interaction into less space. Also, SAW technology is versatile enough to fully emulate other input devices, such as a mouse's ability to drag, point and click, pull down menus, and support high-speed scrolling and 3-D drawing programs.

SAW touchscreens resolve many of the drawbacks inherent in prior established touch technologies, since it combines transparency, ruggedness, and ease of installation. Because SAW offers near-total transparency without parallax, the image clarity is excellent. System resolution is determined by the sophistication of the controller, and theoretically can be as high as 100 points per inch. The absence of exposed plastic or conductive surfaces make it highly suitable for public and industrial applications where vandalism or harsh use is a concern. Also, SAW can be used with a glove or a non-conductive pointer, unlike some of the other touch sensing technologies.

SAW technology has already met with success in multiple arenas, such as for example, as point-of sale terminals, interactive kiosks, training systems, and gaming systems. SAW touchscreens are quickly becoming the preferred touchscreen choice for public information. Notwithstanding the laudable benefits of SAW touchscreens, it is essential to protect the display, internal electronics, transducers and reflective arrays of such touchscreens from environmental contaminants, such as by moisture and other foreign liquids and solids. More particularly, the reflectors of a SAW touchscreen must remain free of any contaminants that would block or absorb an acoustic wave. Also, these touchscreens require a liquid proof seal to permit frequent liquid cleaning. Moreover, in some SAW touchscreen applications, such as in a kiosk, fans are employed which pull cooling air through open areas within the system. In these applications, if the bezel is not sealed properly against the glass touchscreen, a path for dust and contaminants is created, which, of course, degrades system performance.

One suggested attempt to provide a SAW touchscreen sealing arrangement is described in U.S. Patent 5,332,238. As disclosed therein, the sealing arrangement comprises an elongated body of resiliently compressible self-supporting foam material that is claimed to be substantially transmissive to surface acoustic wave energy. Although this sealing arrangement may operate with varying degrees of success, such a sealing arrangement suffers from drawbacks which may detract from its usefulness. For example, an open cell foam material may wick moisture and other liquid contaminants which may contaminate the internal portion of the touchscreen, thereby degrading its performance. Also, a foam material may be susceptible to vandalism because this material may be easily physically destroyed, such as by an end user picking or poking at the foam material, for example. Additionally, a closed cell foam material may attenuate surface acoustic waves.

Further, foam materials (both open and closed cell) are known to degrade with time and exposure to elevated temperature as well as certain chemicals. This degradation would cause particulation of the foam and could potentially damage the internal electronics, as well as laying on the transducers, reflectors and screen -- all of which would cause errors in the touchscreen through attenuation.

Still further, the housing of the seal creates the need for a unique bezel that has multiple channels of specific depths. This housing is not the same as the bezel that is constructed for the typical computer monitor. This housing and sealing system also create a need for a gap to remain between the bezel and touchscreen. This gap may become a trap for solid and liquid contaminants, which may attenuate surface acoustic wave energy and/or cause damage to the seal.

The foregoing illustrates limitations known to exist in present sealing arrangements for acoustic systems, such as a surface acoustic wave touchscreen. Thus, it is apparent that it would be advantageous to provide an improved sealing arrangement directed to overcoming one or more of the limitations set forth above. Accordingly, a suitable alternative is provided including features more fully disclosed hereinafter.

### SUMMARY OF THE INVENTION

The present invention advances the art of surface acoustic wave systems, and the techniques for sealing such systems from environmental contaminants, beyond which is known to date. In one embodiment of the present invention, an environmental barrier is provided for forming a seal between a housing portion and a surface acoustic wave touchscreen. The environmental barrier comprises at least one elongated body of a fluoropolymer material which is defined by a porous microstructure. The environmental barrier is substantially transmissive to surface acoustic wave energy. In a preferred embodiment of the present invention, the porous fluoropolymer material is porous polytetrafluoroethylene which has disposed thereon an adhesive material.

In another embodiment of the present invention, the environmental barrier comprises at least one elongated body of porous polytetrafluoroethylene which is substantially transmissive to surface acoustic wave energy. The at least one elongated body defines opposed first and second surfaces. An adhesive material is disposed on the second surface of that at least one elongated body of porous polytetrafluoroethylene. At least one elongated body of a resilient plastic foam material defines opposed first and second surfaces. The first surface of the at least one elongated body of resilient plastic foam material is adhesively bonded to the second surface of the at least one elongated body of porous polytetrafluoroethylene material. An adhesive material is disposed on the second surface of the at least one elongated body of resilient plastic foam material.

In yet another embodiment of the present invention, the environmental barrier comprises at least one elongated body of porous polytetrafluoroethylene which is at least partially filled with a silicone elastomer material. The at least one elongated body of partially filled porous polytetrafluoroethylene is substantially transmissive to surface acoustic wave energy.

In yet another embodiment of the present invention, a method is provided for sealing the surface of a surface acoustic wave touchscreen in a housing, which includes at least a front bezel portion. The method comprises the steps of:
positioning an elongated body of a fluoropolymer material having a porous microstructure between the touchscreen and the front bezel portion of the housing, the porous fluoropolymer material being substantially transmissive to surface acoustic wave energy; and
compressing the elongated body of porous fluoropolymer material between the touchscreen and the housing to form a barrier to environmental contaminants at the interface of the elongated body of porous fluoropolymer material and the touchscreen.

It is, therefore, a purpose of the present invention to provide an improved environmental barrier for an acoustic device, such as a surface acoustic wave system, for example.

It is another purpose of the present invention to provide an environmental barrier, for a surface acoustic wave system, that is resistant to harsh chemicals.

It is another purpose of the present invention to provide an environmental barrier, for a surface acoustic wave system, that is resistant to physical degradation.

It is another purpose of the present invention to provide an environmental barrier, for a surface acoustic wave system, that is resistant to wicking liquids.

It is another purpose of the present invention to provide an environmental barrier, for a surface acoustic wave system, that is substantially acoustically transmissive.

It is another purpose of the present invention to provide an environmental barrier, for a surface acoustic wave system, that is economical to manufacture and easy installed.

The foregoing and other aspects will become apparent from the following detailed description of the invention when considered in conjunction with the accompanying drawing figures.

### BRIEF DESCRIPTION OF THE DRAWINGS

Figure 1 is an exploded, partial perspective view of a surface acoustic wave touchscreen system having the environmental barrier of the present invention.

Figure 2 is one embodiment of an environmental barrier of the present invention.

Figure 3 is another embodiment of an environmental barrier of the present invention.

Figure 4 is another embodiment of an environmental barrier of the present invention.

Figure 5 is a view detailing a mating interface of the environmental barrier of the present invention, a display glass and a bezel structure.

Figure 6 is a view of a conventional touchscreen glass panel, showing the location of the environmental barrier, the transducers, and the reflector arrays.

### DETAILED DESCRIPTION OF THE INVENTION

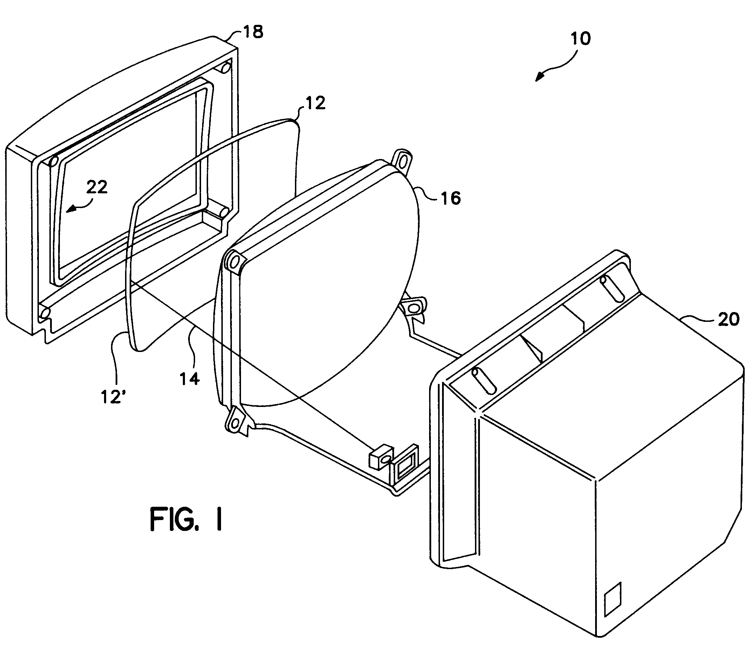

Referring now to the drawings, wherein similar reference characters designate corresponding parts throughout the several views, a surface wave acoustic touchscreen system, incorporating an environmental barrier in accordance with the present invention, is generally illustrated at 10 in Figure 1. The touchscreen system 10 includes a touchscreen 12, a touchscreen power cable 14, a graphic generator 16, such as a conventional cathode ray tube, and a housing comprising a front bezel portion 18 and a rear portion 20. The environmental barrier of the present invention, illustrated generally at 22, is operatively positioned in a predetermined portion of the front bezel portion 18.

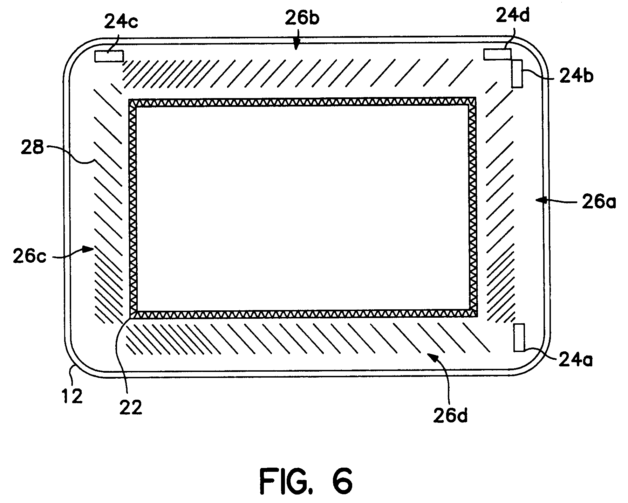

Touchscreen 12, having an operative surface 12', typically is comprised of glass, but other hard, transparent materials, such as polycarbonate for example, may also be used. As best seen by reference to Figure 6, surface acoustic wave energy is coupled to and extracted from touchscreen 12 by four identical piezoelectric transducers 24a-d, and reflector arrays 26a-d. The rectangular area within the four corners defined by transducers 24a-d may be considered the active area of touchscreen 12. Reflector arrays 26a-d are composed of fired-on glass frits 28 of a slightly different density than that of the touchscreen 12. The width of reflector arrays 26a-d and transducers 24a-d is proportional to the X-Y dimensions of the touchscreen 12. Each axis has a transmitting and a receiving transducer and a pair of mirror-image reflector arrays. In the illustrated embodiment, transducers 24a and 24b transmit and receive, respectively, for the Y-axis utilizing mirror-image reflector arrays 26b and 26d. For the X-axis, transducers 24c and 24d transmit and receive, respectively, utilizing mirror-image reflector arrays 26a and 26c. Electrical energy is supplied to transducers via the touchscreen power cable 14.

As a SAW energy packet, generated by transducer 24a, travels over the surface of reflector array 26d, a small portion of the energy is reflected by each of frits 28, with the balance of the energy continuing to propagate down array 26d. The reflected portion travels at a right angle across the screen and is reflected again by a mirror image frit in array 26b on the opposite side, this time being directed at another right angle toward receiving transducer 24b. The burst signal is recovered at receiving transducer 24b as the sum of all the reflected energy, and is a signal much longer in time than the original transmitted pulse. The limits of the recovered signal are a function of the minimum and maximum path lengths around the screen. This process is alternately repeated periodically at the system operating frequency for the X and Y axes.

When the surface 12' of the touchscreen 12 is touched, the touching instrument absorbs a portion of the SAW energy in the glass under the location of the touch. This causes an attenuation in the received signal at a time precisely associated with the location of the touch. SAW systems also can develop a Z axis coordinate related to a touch pressure, based on the degree of absorption of energy.

A SAW touchscreen system utilizes a microprocessor-based controller with memory and peripheral hardware, including RF amplifiers, a burst amplifier, an AM detector, a comparator and a digital-to-analog converter. Typically, this controller will communicate with a host computer system via an appropriate interface.

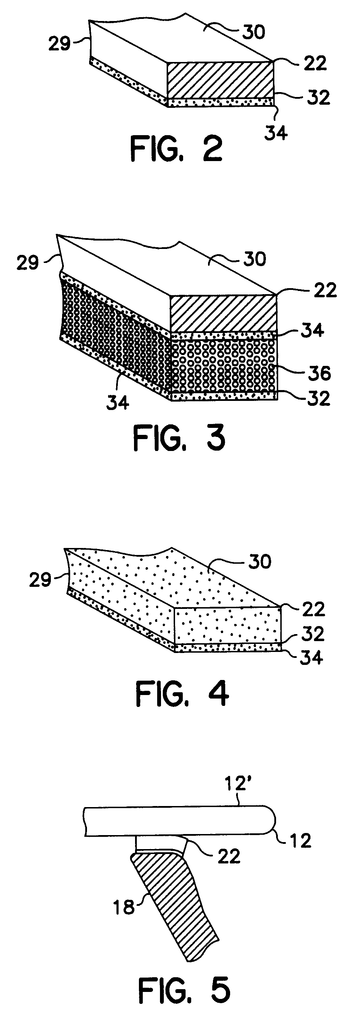

It has been discovered that an environmental barrier 22 comprising an elongated body of a flexible, self-supporting fluoropolymer material, having a porous microstructure, will provide an effective seal from both liquid and solid contaminants, without adversely affecting the operation of the SAW touchscreen. As best seen by reference to Figure 5, preferably, the environmental barrier 22 is applied to the front bezel portion 18 in a fashion which places the barrier 22 in contact with the touchscreen when the acoustic touchscreen system 10 is assembled.

In one embodiment of the present invention, the environmental barrier 22 is comprised of an ePTFE material which may be employed individually or in combination with a resilient material, such as a flexible, plastic foam material. The ePTFE material may be unfilled or filled. Suitable filler materials may provide the ePTFE material with desirable physical properties, such as color or resiliency, for example. The environmental barrier may also comprise any other suitable fluoropolymer material having a porous microstructure.

For example, the ePTFE material may comprise expandable microspheres blended into a PTFE composition. Such microspheres comprise a plastic coating surrounding an expandable liquid or gaseous volatile fluid. As is explained in United States Patent 3,615,972 issued October 26, 1971, to Morehouse et al., thermoplastic microspheres are adapted to expand dramatically when exposed to heat. These microspheres are monocellular particles comprising a body of resinous material encapsulating a volatile fluid. When heated, the resinous material of thermoplastic microspheres softens and the volatile material expands -- causing the entire microsphere to increase substantially in size. On cooling, the resinous material in the shell of the microspheres ceases flowing and tends to retain its enlarged dimension; the volatile fluid inside the microsphere tends to condense, causing a reduced pressure in the microsphere.

Such thermoplastic microspheres are now commercially available from Nobel Industries Sweden, Sundsvall, Sweden, under-the trademark EXPANCEL®. These microspheres may be obtained in a variety of sizes and forms, with expansion temperatures generally ranging from 80 to 130°C. A typical EXPANCEL microsphere has an initial average diameter of 9 to 17 microns and an average expanded diameter of 40 to 60 microns. According to Nobel Industries, the microspheres have an unexpanded true density of 1250-1300 kg/m³ and an expanded density below 20 kg/m³.

It should be understood that the use of the term "expandable microsphere" herein is intended to encompass any hollow resilient container filled with volatile fluid which is adapted to expand. Although presently available microspheres are essentially ball-shaped particles adapted to expand when exposed to an energy source, it should be understood that such microspheres are quite resilient in their expanded form and can be compressed and released (e.g. through extrusion) to achieve the expansion required for the present invention. Additionally, it may be possible to form such products in a variety of other shapes, such as tubes, ellipsoids, cubes, particles, etc. As such, the term "expandable microsphere" in the context of the present invention is intended to include all applicable forms and uses of these products now know or later developed.

In one presently preferred embodiment of the present invention, EXPANCEL type 091 DU is employed. This product comprises an off-white dry powder with a particle size between 5 and 50 microns. The shell of the microsphere comprises acrylonitrile or methacrylonitrile. The volatile liquid comprises isopentane.

It has been found that by mixing a dry preparation of EXPANCEL microspheres with a dispersion of PTFE or similar polymer and then heating the resulting composition, the polymer will undergo expansion in three-dimensions to achieve a porous network of polymeric nodes and fibrils. A mixture of PTFE, in the form of paste, dispersion or powder, and microspheres, in the form of dry powder or solution, are mixed in proportions of 1 to 90% by weight of microspheres, with 5 to 85% by weight of microspheres being preferred. Mixture may occur by any suitable means, including, for example, dry blending of powders, wet blending, co-coagulation of aqueous dispersions and slurry filler, high shear mixing, etc. Once mixed, preferably, the resulting composition is heated to a temperature of 80 to 170°C for a period of 0.5 to 10 minutes to activate the microspheres.

With currently available microsphere technology, if further density reduction is desired, the composition may be re-heated to a temperature of 40 to 200°C and mechanically expanded through any conventional means, such as those disclosed in United States Patent 3,963,566. In fact, it should be appreciated that the present invention is believed to lend itself to incorporation with many existing mechanical expansion techniques, whether before, during and/or after microsphere expansion.

The resulting product has exceptional elasticity/resilience to deformation. Another property is its ability to "puff" into a resilient cushion-like coherent mass with substantial proportions of open air spaces therein. The mass can expand in all dimensions and/very surprisingly, remains highly self-cohesive despite the dramatic increase in its dimensions and typical air space contents from 10 to 50 to 80% or more. Although not necessary, by mechanically expanding the PTFE/microsphere composition in addition to the microsphere expansion, the resulting product becomes even less dense.

The "puffed" mass of the present invention has proven to be remarkably elastic and resilient to deformation. For instance, a typical expanded mass will withstand compression of 50% or more with nearly 100% rebound to original shape.

The expanded PTFE material, from which the environmental barrier 22 may be made, may be produced through the methods described in United States Patents 3,956,566; 3,962,153; 4,096,227; and 4,187,390; each incorporated by herein by reference. For instance, an expanded PTFE rod may be formed from a mixture of PTFE resin (having a crystallinity of about 95% or above) and a liquid lubricant (e.g., a solvent of naphtha, white oil, mineral spirits, or the like). The mixture is thoroughly blended and then dried and formed into a pellet. The pellet is extruded into a rod shape through a ram-type extruder. Subsequently, the lubricant may then be removed through evaporation in an oven. The resulting rod material may be subjected to uniaxial or biaxial stretching at a temperature of less than 327°C to impart the desired amount of porosity and other properties to the rod. Stretching may be performed through one or more steps, at amounts varying from about 1:1 to less than about 45:1. The resulting rod may then be subjected to a sintering temperature above 345°C (i.e.,the melting temperature of PTFE) to amorphously lock the rod in its expanded orientation. Alternatively, a flat tape or membrane may be formed through a similar procedure except that the dried pellet is extruded into a flat sheet. Once expanded and amorphously locked, this sheet may then be cut into any desired shape. In both of these instances, a porous, expanded structure is obtained.

The expanded PTFE structure comprises polymeric nodes interconnected by fibrils. Typical properties of such a structure comprise an average fibril length between nodes of from about 0.05 to about 30 µm (preferably 0.2 to 10 µm), and a void volume of 20 to 80% (preferably 30 to 70%). As should be evident from the following description, the precise properties and dimension of expanded PTFE structures employed with the present invention are a function of application. The general membrane properties suitable for use with the present invention should include medium to high porosity, and wettability by various solvents, such as methylene chloride, toluene, and/or acetone.

The fibril length of expanded PTFE that has been expanded in a single direction is defined herein as the average of ten measurements between nodes connected by fibrils in the direction of expansion. The ten measurements are made on a representative micrograph of an expanded PTFE sample. The magnification of the micrograph should be sufficient to show at least five sequential fibrils within the length of the micrograph. Two parallel lines are drawn across the length of the micrograph so as to divide the image into three equal areas, with the lines being drawn in the direction of expansion and parallel to the direction of orientation of the fibrils. Measuring from left to right, five measurements of fibril length are made along the top line in the micrograph beginning with the first nodes to intersect the line near the left edge of the micrograph, and continuing with consecutive nodes intersecting the line. Five more measurements are made along the other line from right to left, beginning with the first node to intersect the line on the right side of the micrograph. The ten measurements obtained by this method are averaged to obtain the average fibril length of the material.

One embodiment of the environmental barrier 22 is illustrated in section in Figure 2. As illustrated therein, the environmental barrier 22 comprises an ePTFE material 29 having a sealing surface 30 and a positioning surface 32. The sealing surface 30 contacts surface 12' of touchscreen 12 in an assembled system 10. In the embodiment illustrated in Figure 2, the ePTFE material 29 has been filled with carbon particles to provide a black color to the barrier 22. As may be appreciated by one skilled in the art, the ePTFE material also will function effectively as an environmental barrier in an uncolored or unfilled state.

A layer of an adhesive material 34 may be disposed on the positioning surface 32. The adhesive material may include, but is not limited to the following types of adhesives: pressure-sensitive adhesives, acrylics, solvent-based adhesives, heat activated adhesives, hot melts, or elastomerics. The layer of adhesive 34 should provide a sufficient bond to affix the barrier 22 to the front bezel portion 18. One preferred adhesive material comprises a layer of polyester film having layers of silicone rubber adhesive deposited on both surfaces of the film. The adhesive layer 34 may define a thickness range from about 0.1 mm to about 0.5 mm, and more preferably from about 0.1 mm to about 0.3 mm. Preferably, the layer of adhesive material 34 will permit the barrier to be re-positioned, if necessary, during the assembly of a system 10.

Another embodiment of the environmental barrier 22 is illustrated in section in Figure 3. As illustrated therein, a layer of ePTFE material 29 is combined with a resilient plastic foam layer 36. The ePTFE material 29 may or may not be colored and/or filled. In such an embodiment of the environment barrier 22, the layer of ePTFE material 29 is adhesively bonded to the foam layer 36 by a layer of a suitable adhesive material 34, as described hereinabove. A second layer of such an adhesive material 34 is deposited on a positioning surface 32 of the foam layer 36.

It has been discovered that in some instances, more resilience is required of the environmental barrier 22 than is provided solely by the ePTFE material 29. For example, a touchscreen 12 having an extreme curvature may be paired with a poor fitting front bezel portion 18. In such a case, a composite environmental barrier 22, of the type illustrated in Figure 3, may provide the necessary resilience to sealingly fill any voids which may exist between the front bezel portion 18 and the surface 12' of the touchscreen 12.

Yet another embodiment of a resilient environmental barrier 22 is illustrated in section in Figure 4. As illustrated therein, the environmental barrier 22 comprises a composite of a porous substrate of expanded polytetrafluoroethylene imbibed with a silicone elastomer material. The silicone filled ePTFE material 29 defines a sealing surface 30 and a positioning surface 32. A layer of the adhesive material 34 is disposed an the positioning surface 32. The silicone filled ePTFE may or may not be colored. The silicone filled ePTFE material 29 of Figure 4 may be obtained by suitable processing, which is described in detail hereinafter.

First a solution is formed by dissolving a silicone, such as a fluorosilicone, in an organic solvent. The ratio of silicone to solvent should be in the range of 4:1 to 1:10 parts by volume, and preferably is in the range of 3:1 to 1:3 parts by volume. The solution is formed through any conventional means, such as by blending in a mechanical mixer under ambient conditions.

The preferred solution may consist of a silicone material comprising a material soluble in one or more solvents capable of permeating and wetting out an expanded PTFE structure. The material preferably has a solids content of 95-100%, a specific gravity of between 0.95 to 1.5, and a viscosity between 300 and 150,000 centipoise. The material is preferably translucent in color. Further, the material preferably employs a one or two part cure system, ideally at an elevated temperature, to cure the liquid silicone into a rubber-like mass. It is particularly preferred to use a silicone with a platinum-type cure system that is activated at elevated temperatures to cross-link into a rubber-like substance.

It is suggested to select the silicone material from the group consisting of siloxane or polysiloxane having reactive groups, alkoxysilane or partially hydrolyzed forms thereof, and copolymeric siloxane having reactive groups. Known curing silicone rubber material compositions include normal temperature curing types, low temperature curing types, and high temperature curing types. Suitable silicones for use in the present invention include dimethylvinylated silica, trimethylated silica, methylhydrogen siloxane, dimethylhydrogen siloxane, dimethyl siloxane, dimethylvinyl-terminated siloxane, dimethylmethylphenylmethoxy silicone polymer, and methyltrimethoxysilane. Commercially available silicones for use with the present invention include Q3-6611, X1-4105, and Q1-4010, all available from Dow Corning, Inc., Midland, Michigan.

Room temperature curing and high temperature curing compositions of silicone include two-pack types materials. Two-pack type materials deliver a silicone rubber having cross-linked structure by means of a reaction between siloxanes having reactive groups (e.g., SiOH, SiO-R (where R is an alkyl group), SiH, SiCH=CH₂ or the like) in the presence of a catalyst. The two-pack compositions are divided into condensation reaction types and addition reaction types.

The condensation reaction types include those employing: dehydration-condensation reactions between silanol and alkoxy siloxane; a de-alcoholation condensation reaction between silonal and alkoxy siloxane; and a dehydrogenation condensation reaction between SiH and silanol. The addition reaction types include those employing addition reaction between vinyl groups, alkyl groups, or other unsaturated groups and SiH.

A suitable curing catalyst is selected depending on the type of curing reaction desired. For example, metal, organic-metal salts, organic amines, quaternary ammonium salts, and the like are employed in reactions of condensation reactions types. Palladium or platinum back, platinum asbestos, chlorplatinic acid or other form of platinum are employed in reactions of addition-reaction types. The above-mentioned compositions may also contain other materials, such as silicone oil, SiO₂, or fumed silica as property altering agents.

The preferred solvent comprises a solvent that both actively dissolves the silicone and is readily absorbed into structure of the intended polymeric substrate. For use with a PTFE substrate structure, a halogenated solvent, such as methylene chloride, acetone, or toluene, is particularly useful, as are commercially available solvents NORPAR-12 and ISOPAR-C. While methylene chloride has produced the best results to date, health concerns surrounding the use of this solvent may be objectionable for some applications. Accordingly, other preferred solvents continue to be sought.

The presently preferred composition comprises a mixture of 10-75% by weight of Q1-4010 silicone elastomer and 25-90% methylene chloride, acetone, ISOPAR-C, or toluene solvent. This mixture is formed by stirring the solvent while adding the silicone elastomer at room temperature (about 22°C) until the mixture has achieved a homogenous color. With an acetone mixture, the mixture should be re-stirred prior to each use due to precipitation of materials.

Once the silicone/solvent composition is formed, it can then be applied to any suitable microporous substrate. The preferred substrate for use with the present invention comprises the porous expanded PTFE material described hereinabove.

The silicone/solvent composition is applied to the porous PTFE material by spreading the composition evenly over the substrate. Thereafter, the composition is allowed to become absorbed within the substrate. Preferably, the PTFE material is immersed within the solvent until it becomes saturated, such as by submerging the material in a bath of solution over a period of 1 to 5 minutes. The solution may be placed under reduced pressure, such as in a vacuum chamber, to facilitate complete filling of the porous polymeric substrate.

Once filled, the membrane and absorbed solution is exposed to an energy source, such as a heated oven set at 70 to 75^{o}C or above, for a period of 2 to 5 minutes or more to evaporate away any solvent. Ideally, evaporation comprises employing an oven heated to 85^{o}C or above and exposing the composition for at least 5 minutes. The evaporation of solvent can also be performed in one of the following manners: air drying for about a 5 hour period; or about 1 hour at about 50^{o}C in an explosion-proof oven.

After impregnation, the composite material may then be subjected to appropriate conditions to cure the silicone material. For a Q1-4010 type silicone of Dow Corning Company, a filled PTFE membrane can be cured by placing the composite material within an oven at about 110°C for about 30 minutes.

The silicone should overlay the polymeric nodes and fibrils of the expanded PTFE while leaving the microporous structure open to air permeation, i.e. the silicone filled ePTFE material must remain acoustically transmissive.

The ePTFE material 29 should have the appropriate density and acoustic characteristics such that it is substantially transmissive to SAW energy. In other words, the ePTFE material will allow SAW energy at the selected audio frequency to propagate through the material without significant attenuation so that a false touch is not registered by the touchscreen, or so that the operation of the touchscreen is not adversely affected. The percentage of SAW energy which the environmental barrier 22 should transmit will vary depending on the specifications of the particular SAW touchscreen, and may be affected by the adjustable sensitivity of some SAW touchscreens. In any event, the attenuation of SAW energy transmitted through the barrier 22 must be less than the threshold level of attenuation at which the touchscreen will register a touch. For example, the environmental barrier of the present invention, as shown in Figure 2, is known to have an attenuation coefficient of 0.7 dB/in., at a 5 megahertz frequency.

In a preferred embodiment, the ePTFE material 22 is colored black or dark gray. The black or dark gray color may be obtained by many methods including, but not limited to; loading the ePTFE material with a black material such as carbon particles, loading the ePTFE material with a pigment, or dipping the ePTFE material in a pigment, ink or dye.

The exact dimensions of the environmental barrier 22 are not critical to the operation of the barrier. It has been discovered that a barrier having a width of from about 2 mm to about 10 mm is suitable to provide a sufficient environmental seal. In a preferred embodiment, the barrier 22 may have a width of from about 3 mm to about 8 mm. Thickness of the ePTFE may be from 0.5 mm to 8 mm, and more preferably from about 1 mm to about 6 mm.

Without intending to limit the scope of the present invention, the environmental barrier 22 may be better understood by referring to the following examples:

### Example 1

A slurry of 1542 grams of Ketjenblack 300-J carbon black, obtained from Noury Chemical, and 55 liters of deionized H₂0 was prepared in a 115 liter container. While the slurry was agitated at 180 rpm, 4626 grams of PTFE in the form of 10.2% solids polytetrafluoroethylene (PTFE) dispersion was rapidly poured into the mixing vessel. The PTFE dispersion was an aqueous dispersion obtained from ICI Americas Co. The mixture was self coagulating, and within 1.5 minutes, co-coagulation was complete. When the coagulum had settled to the bottom of the mixing vessel, and the effluent water was clear, the effluent was removed. The coagulum was dried at 160°C in a convection oven. The material dried in small, cracked cakes approximately 2 cm thick, and was chilled to below 0°C. The chilled cake was ground in a mill and screened through a 0.635 cm mesh stainless steel screen. Then, 1.08 cc of mineral spirits per gram of powder was added. The mixture was chilled, again, passed through a 0.635 cm mesh screen, tumbled for 10 minutes, and then allowed to sit at 18°C for 24 hours, and was retumbled for 10 minutes. A pellet was formed in a cylinder by pulling a vacuum and pressing at 800 psi. The pellet was then heated in a sealed tube. The pellet was then extruded into a film form. The film was then calendered through heated rolls to 0.228 cm. The lubricant was then evaporated by running the film across heated rolls. The film was stretched in the machine direction at a 2.85 to 1 ratio, 280°C, and 105 fpm output speed. Then, the film was sintered at 360°C and 15 fpm output speed. This film was then slit and a double-sided pressure sensitive adhesive material was applied to one side of the film.

### Example 2

A slurry of 1542 grams of Ketjenblack 300-J carbon black, obtained from Noury Chemical, and 55 liters of deionized H₂0 was prepared in a 115 liter container. While the slurry was agitated at 180 rpm, 4626 grams of PTFE in the form of 10.2% solids polytetrafluoroethylene (PTFE) dispersion was rapidly poured into the mixing vessel. The PTFE dispersion was an aqueous dispersion obtained from ICI Americas Co. The mixture was self coagulating, and within 1.5 minutes, co-coagulation was complete. When the coagulum had settled to the bottom of the mixing vessel, and the effluent water was clear, the effluent was removed. The coagulum was dried at 160°C in a convection oven. The material dried in small, cracked cakes approximately 2 cm thick, and was chilled to below 0°C. The chilled cake was ground in a mill and screened through a 0.635 cm mesh stainless steel screen. Then, 1.24 cc of mineral spirits per gram of powder was added. The mixture was chilled, again passed through a 0.635 cm mesh screen, tumbled for 10 minutes, then allowed to sit at 18°C for 24 hours, and was retumbled for 10 minutes. A pellet was formed in a cylinder by pulling a vacuum and pressing at 800 psi. The pellet was then heated in a sealed tube. The pellet was extruded into a tape form of approximately 0.30 cm thickness. The mineral spirits were evaporated from the tape, which was immediately stretched in the longitudinal direction at a 3 to 1 ratio, 390°C, and 8 fpm output speed, while simultaneously sintering. This tape was then collected, and a double-sided pressure sensitive adhesive was then applied to one side of the tape.

Although a few exemplary embodiments of the present invention have been described in detail above, those skilled in the art readily appreciate that many modifications are possible without materially departing from the novel teachings and advantages which are described herein. Accordingly, all such modifications are intended to be included within the scope of the present invention, as defined by the following claims.

## Claims

1. An environmental barrier for forming a seal between a housing portion and a surface acoustic wave touchscreen, the environmental barrier comprising:
at least one elongated body of a fluoropolymer material having a porous microstructure which is substantially transmissive to surface acoustic wave energy.

2. An apparatus for sealing a surface acoustic wave touchscreen system from environmental contaminants, the apparatus comprising:
at least one elongated body of porous polytetrafluoroethylene which is substantially transmissive to surface acoustic wave energy.

3. The sealing apparatus of claim 2, wherein the porous polytetrafluoroethylene is expanded polytetrafluoroethylene.

4. The sealing apparatus of claim 2, wherein the porous polytetrafluoroethylene has embedded therein microspheres defined by monocellular particles comprising a body of resinous material encapsulating a volatile fluid.

5. The sealing apparatus of claim 2, wherein the elongated body defines a sealing surface and a positioning surface, and wherein the positioning surface has disposed thereon an adhesive material.

6. The sealing apparatus of claim 5, wherein the adhesive material defines a thickness of from about 0.1 mm to about 0.5 mm.

7. The sealing apparatus of claim 5, wherein the adhesive material defines a thickness of from about 0.1 mm to about 0.3 mm.

8. The sealing apparatus of claim 2, wherein the porous polytetrafluoroethylene is filled with a pigment material.

9. The sealing apparatus of claim 8, wherein the pigment material is carbon particles.

10. The sealing apparatus of claim 5, wherein the adhesive material is a pressure sensitive adhesive.

11. The sealing apparatus of claim 5, wherein the adhesive material comprises:
an elongated polyester film having opposed first and second surfaces, which have deposited thereon a silicone-based adhesive.

12. The sealing apparatus of claim 5, wherein the adhesive material is selected from a group consisting of acrylics, solvent-based adhesives, heat activated adhesives, hot melt adhesives or elastomerics.

13. The sealing apparatus of claim 2, wherein the elongated body defines a width dimension of from about 2 mm to about 10 mm.

14. The sealing apparatus of claim 2, wherein the elongated body defines a width dimension of from about 3 mm to about 8 mm.

15. The sealing apparatus of claim 2, wherein the elongated body defines a thickness dimension of from about 0.5 mm to about 8 mm.

16. The sealing apparatus of claim 2, wherein the elongated body defines a thickness dimension of from about 1 mm to about 6 mm.

17. An apparatus for sealing a surface acoustic wave touchscreen system from environmental contaminants, the apparatus comprising:
at least one elongated body of porous polytetrafluoroethylene which is substantially transmissive to surface acoustic wave energy, the at least one elongated body defining opposed first and second surfaces;
an adhesive material disposed on the second surface of that at least one elongated body of porous polytetrafluoroethylene;
at least one elongated body of a resilient plastic foam material which defines opposed first and second surfaces, the first surface of the at least one elongated body of resilient plastic foam material being adhesively bonded to the second surface of the at least one elongated body of porous polytetrafluoroethylene material; and
an adhesive material disposed on the second surface of the at least one elongated body of resilient plastic foam material.

18. An environmental barrier for forming a seal between a housing portion and a surface acoustic wave touchscreen, the environmental barrier comprising:
at least one elongated body of porous polytetrafluoroethylene which is at least partially filled with a silicone elastomer material, the at least one elongated body of partially filled porous polytetrafluoroethylene being substantially transmissive to surface acoustic wave energy.

19. The sealing apparatus of claim 18, wherein the porous polytetrafluoroethylene is expanded polytetrafluoroethylene.

20. The sealing apparatus of claim 18, wherein the porous polytetrafluoroethylene has embedded therein microspheres defined by monocellular particles comprising a body of resinous material encapsulating a volatile fluid.

21. The sealing apparatus of claim 18, wherein the elongated body defines a sealing surface and a positioning surface, and wherein the positioning surface has deposited thereon an adhesive material.

22. The sealing apparatus of claim 21, wherein the adhesive material defines a thickness of from about 0.1 mm to about 0.5 mm.

23. The sealing apparatus of claim 21, wherein the adhesive material defines a thickness of from about 0.1 mm to about 0.3 mm.

24. The sealing apparatus of claim 18, wherein the porous polytetrafluoroethylene is filled with a pigment material.

25. The sealing apparatus of claim 24, wherein the pigment material is carbon particles.

26. The sealing apparatus of claim 21, wherein the adhesive material is a pressure sensitive adhesive.

27. The sealing apparatus of claim 21, wherein the adhesive material comprises:
an elongated polyester film having opposed first and second surfaces which have deposited thereon a silicone-based adhesive.

28. The sealing apparatus of claim 21, wherein the adhesive material is selected from a group consisting of acrylics, solvent-based adhesives, heat activated adhesives, hot melt adhesives or elastomerics.

29. The sealing apparatus of claim 18, wherein the elongated body defines a width dimension of from about 2 mm to about 10 mm.

30. The sealing apparatus of claim 18, wherein the elongated body defines a width dimension of from about 3 mm to about 8 mm.

31. The sealing apparatus of claim 18, wherein the elongated body defines a thickness dimension of from about 0.5 mm to about 8 mm.

32. The sealing apparatus of claim 18, wherein the elongated body defines a thickness dimension of from about 1 mm to about 6 mm.

33. A method for sealing the surface of a surface acoustic wave touchscreen in a housing which includes at least a front bezel portion, the method comprising the steps of:
positioning an elongated body of a fluoropolymer material having a porous microstructure between the touchscreen and the front bezel portion of the housing, the porous fluoropolymer material being substantially transmissive to surface acoustic wave energy; and
compressing the elongated body of porous fluoropolymer material between the touchscreen and the housing to form a barrier to environmental contaminants at the interface of the elongated body of porous fluoropolymer material and the touchscreen.
